Europäisches Patentamt

European Patent Office

Office européen des brevets

(19)

(11) Publication number: **0 031 312**
**B1**

# EUROPEAN PATENT SPECIFICATION

(12)

(45) Date of publication of patent specification: **24.10.84**

(51) Int. Cl.³: **D 05 B 23/00**

(21) Application number: **80850184.5**

(22) Date of filing: **10.12.80**

(54) **Electronic sewing machine with a sewing guide.**

(30) Priority: **11.12.79 SE 7910201**

(43) Date of publication of application:
**01.07.81 Bulletin 81/26**

(45) Publication of the grant of the patent:
**24.10.84 Bulletin 84/43**

(84) Designated Contracting States:
**CH DE FR GB IT LI**

(56) References cited:
**EP-A-0 013 349**
**EP-A-0 016 724**
**DE-A-2 444 189**
**US-A-3 613 610**
**US-A-3 871 310**
**US-A-4 079 683**
**US-A-4 100 865**
**US-A-4 236 467**

(73) Proprietor: **Husqvarna Aktiebolag**
**Fack**
**S-56181 Huskvarna (SE)**

(72) Inventor: **Bergvall, Bengt Allan**
**Blävingevägen 1**
**S-561 49 Huskvarna (SE)**

(74) Representative: **Hagelbäck, Evert Isidor**
**c/o AB Electrolux Patentavdelningen**
**S-105 45 Stockholm (SE)**

Courier Press, Leamington Spa, England.

Description

The present invention relates to an arrangement in sewing machines for making a seam choice in dependence of a cloth quality and the purpose of the seam — it is especially related to a built-in sewing guide in sewing machines provided with pattern selection means and seam memory for the supply of stitch data to the stitch forming instrumentalities of the machine.

Within the art of electronic pattern data circuits for sewing machines several systems have been developed for the generation of control signals. Such a typical system may, for instance, be composed as follows: There is a memory unit in which the patterns are stored so that every position of the needle in the transverse direction corresponds to a digital code word in the memory. Circuits of this kind must include an address counter in order to make the addressing of the successive needle position run forward, which counter is stepped by pulses in synchronism with the running of the machine. The address counter is supplied with the address (start address) of the selected pattern. Such a start address is carried out by an input selector, e.g. a set of change-over switches, and a logic circuit for supplying a digital input signal to an address memory or the like. The address counter releases the code words for each of the following stitches out of the memory, while the fancy seam is sewn. The input selector here said and assumed to be a set of change-over switches or the like has, in the known systems, a row of symbols showing the seam the machine will sew, when a switch referred to a certain symbol is actuated. The choice between several symbols, and occasionally other controls, must be done by the operator himself with the help of a manual and his own knowledge. By this way it may arise a hesitation, how to handle the machine, as the question of cloth quality, the fitness of the several seams etc. can be difficult to answer. It is therefore desirable that a system is provided in the electronics with the purpose of facilitating the seam choice and making it uniform for one and the same type of cloth and seam character (sewing operation) = sew together, overlock, hem etc. An auxiliary unit having these properties is described in the EP—A—0 016 724.

By the present invention a system is presented in which the input information is supplied by the operator directly on the basis of text and symbols on the machine, by means of push buttons etc. referred to them. Proceeding from this information the data system will select one seam or more, which is most proper for the combination of cloth and sewing operation made by the operator. In other words, the system is pre-programmed with regard to the most proper seam for the choice in question. These seams are empirically tested for a lot of different types of cloth and sewing operations and stored in the memory. When the operator has adjusted the push buttons, controls etc. on basis of the text and symbols, the stitch code is supplied for the empirically tested seam, especially made for that material and that operation which the adjustment is made for. The advantage of such a system is that the operator does not need to adjust the cloth feeding, stitch bight, right or left position etc., but only to adjust on symbols and text according to the type of cloth and operation in question. This advantage is obtained, when the system is made in accordance with the characteristics stated in Claim 1.

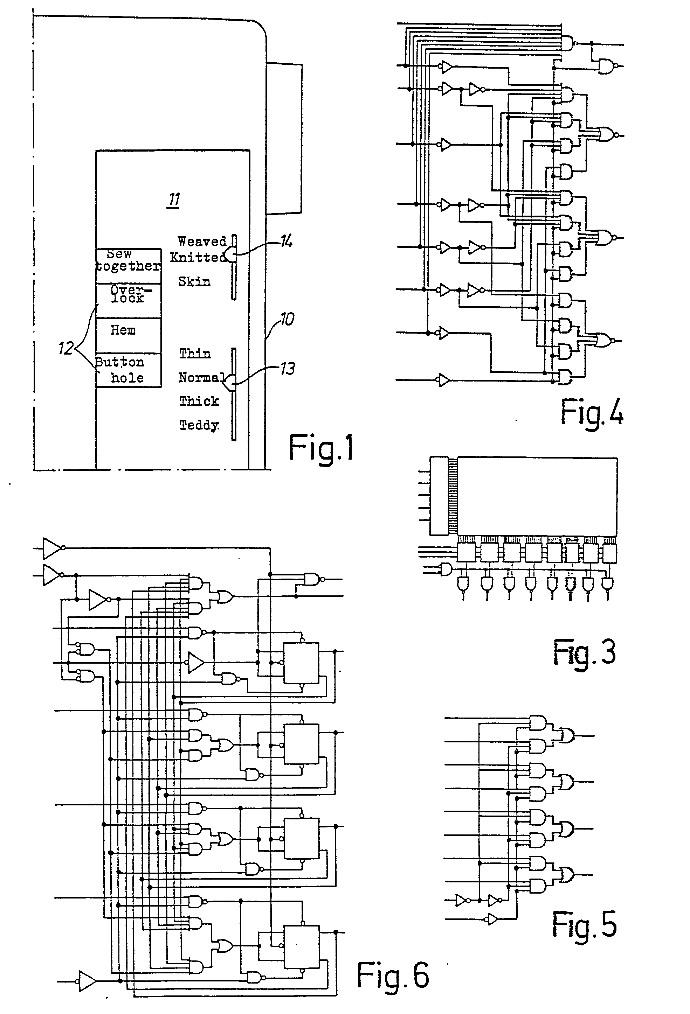

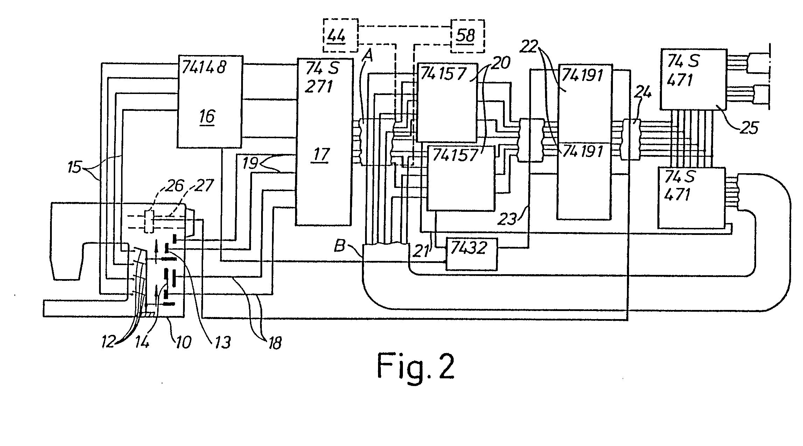

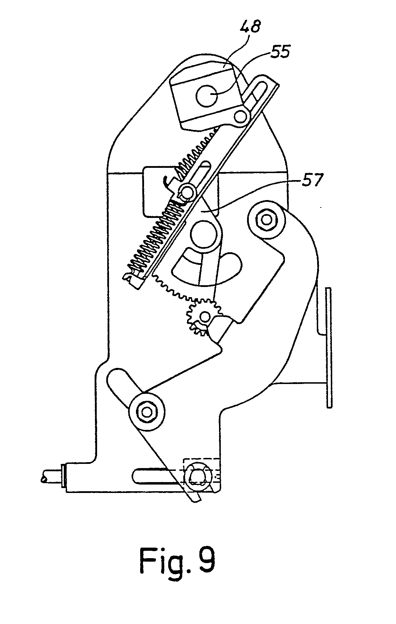

An embodiment of a sewing machine according to the invention for an electronic sewing machine is described in the following with references to the accompanying drawing, which shows in Fig. 1 a panel with pattern selecting means of an input selector on a sewing machine, Fig. 2 a wiring diagram of the electronic system of the sewing machine, Fig. 3 an embodiment of a start address memory (standard circuit No. 74 S271) to which the input selector is connected, Fig. 4 an embodiment of an encoder (standard circuit No. 74148), Fig. 5 an embodiment of an address selector in the electronic system (standard circuit No. 74157), Fig. 6 an embodiment of a counter (standard circuit No. 74191). There is also a mechanical sewing machine described and shown in Figs. 7—9.

A panel 11 is disposed as a carrier for a set of push buttons 12 and a couple of controls 13, 14 on a sewing machine provided with a post 10. These buttons and controls are used for transferring a certain selection of seam to the electronics in the machine, e.g. the controls may be used for pre-adjustment on a certain series of seam patterns, e.g. utility seams of which at least one can be selected on the buttons 12. When the operator pushes such a button, it is created a so called seam selection code which is fed to a so called start address memory. The procedure of creating such a code is hereby explained with reference to Fig. 2.

In the electronic system the essential functional units are interconnected as shown in Fig. 2 and work in the following way:

When the operator pushes a button 12, one of the inputs 15 of an encoder 16 is earthed and a unique 3-bits code is fed to the start address memory 17. This one also has a couple of 2-bits inputs 18, 19 from the controls 13, 14 which together with the said 3-bits code create the input information in the system. The said controls 13, 14 are a couple of change-over switches which multiply the number of possible combinations. Assuming, e.g. four positions on the control 13 and three on the control 14, $4 \times 3 = 12$ different series are obtained each one including four seams as described on the buttons 12 in the shown arrangement. As described by the text on the panel the parameter "Sewing operation" is referred to the buttons, the parameter "Cloth quality" to the control 14 and the parameter "Cloth thickness" to the control 13. The operator starts with the adjustments of the controls 13, 14 and makes them with regard to the material to be sewn. The sewing operation the machine is to make is then determining for the actuation of some of the buttons, for instance, for the operation "hemming" the button "Hem".

The input information releases in the start address memory an address word which is conditioned by all the three parameters, i.e. in the shown embodiment not only the sewing pattern but also the cloth quality and thickness. A wire group A conducts the word to the A-inputs of an address selector 20. If no shift signal is present on the shift input 21 of the selector the word will pass the selector and proceed to an address counter 22. This one is pre-settable so that the word sets the counter to a digital number represented by the word, when a signal is present on a triggering input 23. The address word proceeds via a group 24 to a read memory 25, where the word points out a memory cell, storing the stitch code of the first stitch of the selected seam. A very large number of stitch codes are stored in the read memory — every combination on the buttons and controls demands a certain storing space. The stitch code is fed to a code converter and driving circuits for the zig-zag and cloth feeding mechanisms (not shown). The second stitch code following the first one is pointed out by another address word supplied by the address counter. This one is controlled by a position indicator 26 at the arm shaft 27, by means of a pulse at a moment, when the needle is positioned above the cloth. The number produced on the counter is added by a logic "one" for every such a pulse, whereby another binary number is produced and makes the address word of the next stitch code. The counter makes a step after every revolution of the machine and the address of the next stitch code is transferred to the stitch memory. This is a usual principle for feeding successive code words from a memory and more description of the procedure seems not to be necessary. Also the repetition of a procedure by using a back-jump in the counter by means of its inputs B and the trigger input 22 can be made by using well-known prior art on basis of the said standard circuits.

The reason why a "cloth control" is introduced into the adjusting means is the fact that several textures or qualities of sewing material demand quite different adjustments on the machine even if one and the same sewing operation shall be made as, for example, the slippage of terry cloth against the cloth feeder is, on one hand, quite different to the slippage of plastic cloth on the other hand. As the cloth control gets an adjustment referred to the cloth texture and thickness, a seam is produced defined by a start address word with data (bight and feed) which empirically appear to be suitable to the material in question. Stitch codes of such a seam are registered into the stitch memory in advance, and the start address word adjusts the counter to that seam. When an adjustment to another texture or another operation is made the address word referred to these ones is produced and releases the codes of the other seam etc. Many cloth qualities and thicknesses are similar in sewing and may be classified under a common start address word which enables a reduction of the number of registered seams in the stitch memory.

As examples of sewing operations the words "Sew together", "Overlock", "Hem" and "Button hole" are used on the drawing showing the embodiment of the panel and as examples of cloth textures the words "Weaved", "Knitted", "Skin" are used. These words shall only be considered examples as, in fact there may be more and other words used at several adjustments on the controls.

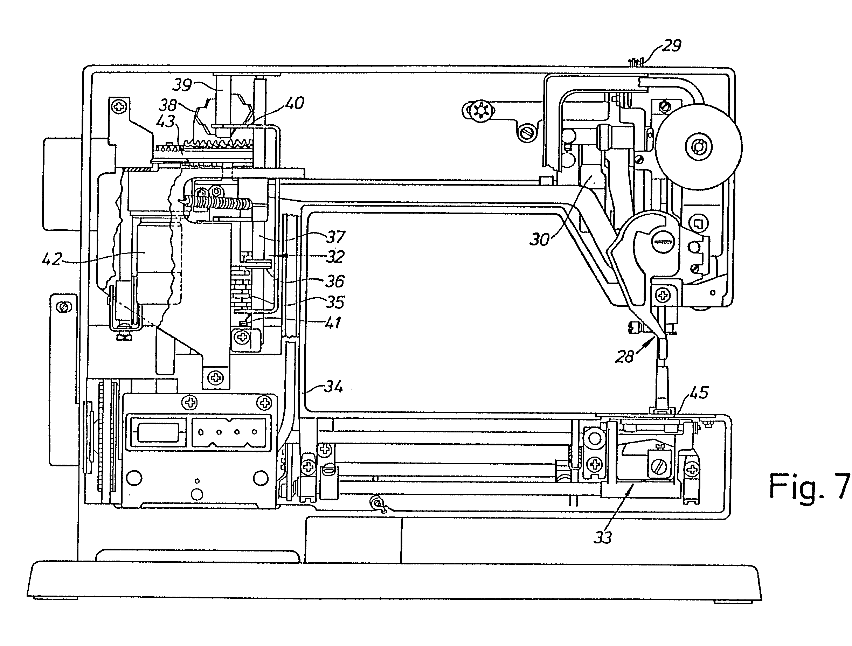

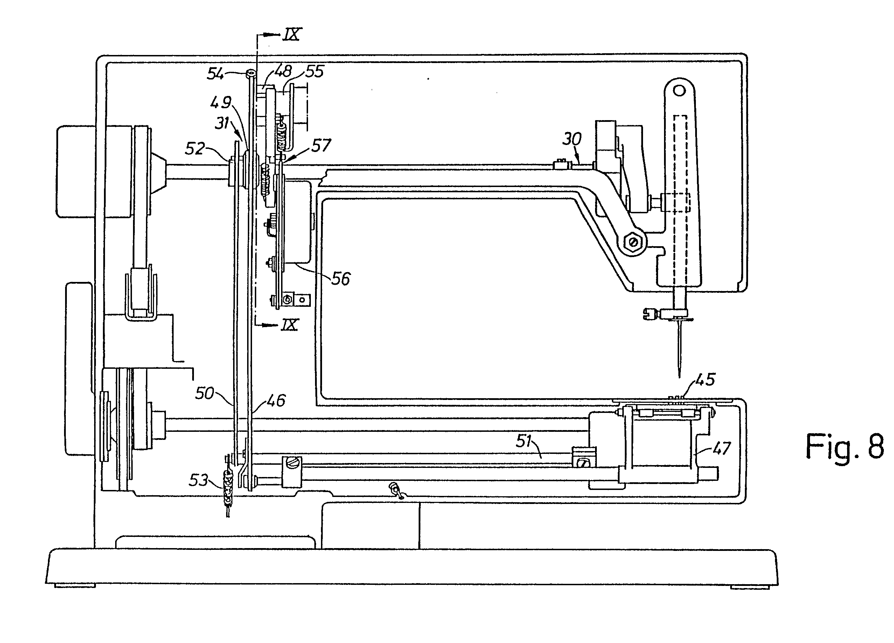

The sewing machine herein before described has an electronic control of the needle and feeder movements, but the invention could also be applied to mechanically controlled sewing machines. Such a machine is shown in Figs. 7 and 8, where the rear wall of the machine is removed. It comprises portions principally known by conventional designs but for simplicity mechanisms are, in this embodiment, integrated into functional units. These are as follows: Presser bar and needle bar 28, thread tensioning device 29, upper arm assembly 30, stitch length arrangement 31, zig-zag device 32, a lower arm assembly and a shuttle mechanism 33. The zig-zag device 32 is positioned in the post 34 of the machine and comprises cam discs 35 of a plurality of seams. The discs are scanned by a cam follower 36, which is journalled and vertically displaceable on a shaft 37. Its vertical position is controlled by an axial curve 38, which is journalled on a second vertical shaft 39 on which the cam discs 35 driven by a mitre gear (not shown) also are journalled. The axial curve is scanned by a curve follower 40, which vertically guides the cam follower 36 against the action of a spring 41.

The setting of the zig-zag device on the several seams is carried out by a step motor 42 which is connected to the axial curve 38 by means of a belt gearing 43. The step motor having a plurality of distinct positions during each revolution is driven by pulses from a special drive unit 44 and allots thereby the axial curve a rotating movement which is a multiple of the angle between two such distinct positions. The axial curve is thus stepwise rotated and the turning from one step to the next one brings about a displacement of the follower 36 from one cam disc to another.

In the lower arm there is a feeder 45 arranged as in any conventional sewing machine. It performs a rectangular movement, a horizontal one and a vertical one. The horizontal one is achieved by means of a link system 46, 47 (Fig. 8), a controllable cullis 48 and an eccentric drive member 49 on the upper arm shaft. The vertical one is constant and achieved by a link system 50, 51 and another eccentric drive member 52 making an upward movement. The return movements of the links are effected by means of springs 53, 54.

The adjustable cullis 48, shown in Fig. 8, is journalled by means of a shaft 55 and the adjustment is made by a step motor 56 and a movement transferring arrangement 57. The stepping of the motor is effected by means of drive pulses applied by a drive unit 58 in the same way as for the motor 42. The transferring arrangement 57 has a special design, which does not here require any explanation. The function thereof is related to the transferring of torsional angles from the step motor to the cullis, which in its turn guides the magnitude of the feed movement in a way known per se.

The said drive units 44, 58 comprise control electronics of the step motors and are substantially constituted of binary counters, which on their inputs receive binary codes and on the outputs supply pulse trains corresponding to the binary codes. The motor responds to every pulse by moving one step. This technique is known per se and does not require explanation. The binary code to be used is produced in a similar way as the start address words mentioned in the description of Fig. 2. The code is produced in the start address memory 17 in dependence of the three parameters sewing operation, cloth quality and thickness and is supplied as a start address word on the group A. The other part of the diagram of Fig. 2, i.e. to the right of the group A, shall be excluded and the drive units 44, 58, the step motors 42, 56 and mechanical gears as described before be substituted therefore. The sewing machine of this embodiment is a combination of electronic adjusting and converting circuitry and mechanical memories and control mechanism associated therewith.

It may be apparent from the foregoing that the invention is not limited to the one or the other type of a sewing machine but may be applicable to all types, electronical as well as mechanical sewing machines and also combinations thereof.

## Claims

1. An electronic sewing machine having a needle positioning mechanism, a cloth feeder, and an input selector adapted to be adjusted by an operator, controlling means of the zig-zag movement of the needle and the feeding movement of the feeder for carrying out seam patterns on a sewing material, and a memory unit connected to control these controlling means as a function of adjustments on said selector having at least one position with an associated text and/or symbol referred to the thickness or texture of the sewing material, characterized in that the memory unit (25) is adapted to produce stitch codes for the controlling means of the zig- zag and feeding movements in accordance with pre-programmed data related to the empirically best stitch characteristics for different thickness and textures of sewing material, and that the input selector (13, 14) comprises means (17) for producing address signals and further means (22) for stepping the address signal output into the memory unit upon completion of operation of said controlling means, whereby the selector may be set in accordance with the thickness and/or texture of sewing material for making an automatic adjustment of the machine on a seam corresponding to the properties of said material.

2. An electronic sewing machine according to Claim 1, characterized in that the selector has at least one position associated with text and/or symbol referred to a sewing operation.

## Patentansprüche

1. Elektronische Nähmaschine mit einem Nadelpositionierungsmechanismus, einem Stoffzuführer und einem Eingangswähler zum Einstellen durch eine Bedienungsperson, einer Steuereinrichtung für die Zick-Zack-Bewegung der Nadel und für die Förderbewegung des Stoffzuführers zur Herstellung von Nahtmustern auf dem zu nähenden Material, und mit einer Speichereinheit zur Steuerung dieser Steuereinrichtung in Abhängigkeit von Einstellungen des Eingangswählers, der mindestens eine Stellung mit einem zugehörigen, auf die Dicke oder die Struktur des Materials bezogenen Text und/oder Symbol hat, dadurch gekennzeichnet, dass die Speichereinheit derart ausgebildet ist, dass sie Stichschlüssel für die Steuereinrichtung für die Zick-Zack- und Förderbewegung erzeugt in Abhängigkeit von vorprogrammierten, auf die empirisch besten Stichcharakteristiken für verschiedene Dicken und Strukturen des Materials bezogenen Daten, und dass der Eingangswähler (13, 14) Mittel (17) zur Erzeugung von Adresssignalen und zuzätzliche Mittel (22) zum Weiterschalten des Adressignalausgangs in die Speichereinheit nach Beendigung des Steuervorgangs der Steuereinrichtung umfasst, wodurch der Eingangswähler in eine Stellung entsprechend der Dicke und/oder der Struktur des Materials eingestellt werden kann, um die Maschine automatisch an eine Naht entsprechend den Eigenschaften des Materials anzupassen.

2. Elektronische Nähmaschine nach Anspruch 1, dadurch gekennzeichnet, dass der Eingangswähler mindestens eine auf einen Text und/oder ein Symbol entsprechend einem Nähvorgang bezogene Stellung hat.

## Revendications

1. Machine à coudre électronique comprenant un mécanisme de positionnement d'aiguille, un dispositif d'avance de tissu et un sélecteur d'entrée destiné à être réglé par un opérateur, un dispositif de commande du mouvement en zigzag de l'aiguille et du mouvement d'avance du dispositif d'avance pour effectuer des motifs de couture sur une matière à coudre, et une unité de mémoire connectée pour commander ces dispositifs de commande en fonction des réglages sur ledit sélecteur comprenant au moins une position avec un texte et/ou un symbole associés concernant l'épaisseur ou la texture de la matière à coudre, caractérisée en ce que l'unité de mémoire (25) est agencée pour produire des codes de points pour le dispositif de commande des mouvements en zigzag et d'avance en fonction de données préprogrammées concernant des meillures caractéristiques de points empiriques pour différentes épaisseurs et textures de la matière à coudre, et en ce que le sélecteur d'entrée (13, 14) comporte un dispositif (17) pour produire des signaux d'adresses et un autre dispositif (22) pour avancer la sortie de signal d'adresse dans l'unité de mémoire à la fin de l'opération dudit dispositif de commande de manière que le sélecteur puisse être réglé en fonction de l'épaisseur et/ou de la texture de la matière à coudre pour effectuer un réglage automatique de la machine sur une couture correspondant aux propriétés de ladite matière.

2. Machine à coudre électronique selon la revendication 1, caractérisée en ce que le sélecteur comporte au moins une position associée avec un texte et/ou un symbole concernant une opération de couture.

Fig.1

Fig.3

Fig.4

Fig.5

Fig.6

Fig. 2

Fig. 7

Fig. 8

Fig. 9